**Europäisches Patentamt**

**European Patent Office**

**Office européen des brevets**

(19)

(11) Veröffentlichungsnummer: **0 078 036**
**B1**

(12)

# EUROPÄISCHE PATENTSCHRIFT

(45) Veröffentlichungstag der Patentschrift:
01.06.88

(51) Int. Cl.⁴: **H 04 M 1/23**

(21) Anmeldenummer: **82109787.0**

(22) Anmeldetag: **22.10.82**

(54) **Tastatur für Kommunikationsendgeräte.**

(30) Priorität: **26.10.81 DE 3142414**

(43) Veröffentlichungstag der Anmeldung:
**04.05.83 Patentblatt 83/18**

(45) Bekanntmachung des Hinweises auf die Patenterteilung:
**01.06.88 Patentblatt 88/22**

(84) Benannte Vertragsstaaten:
**FR GB NL SE**

(56) Entgegenhaltungen:
**DE - A - 2 902 052**
**FR - A - 2 336 011**

**TELEFON REPORT SIEMENS, Jrg. 13, Nr. 3, September 1977, Seiten 117-122, München, DE; H. EBEL et al.: "Fernsprech-Endgeräte - Entwicklung und neuester Stand"**
**SIEMENS-ZEITSCHRIFT, Band 47, Heft 4, April 1973, Seiten 207-210, Erlangen, DE; F. GIBIS et al.: "Siemens topset 100, eine Serie neuer Chef-Fernsprechanlagen"**

(73) Patentinhaber: **Siemens Aktiengesellschaft Berlin und München, Wittelsbacherplatz 2, D-8000 München 2 (DE)**

(72) Erfinder: **Gebhardt, Hartmut, Dipl.-Ing., Pötschener Strasse 2, D-8035 Gauting (DE)**
Erfinder: **Heiss, Reinhold, Ing. grad., Gautinger Strasse 25, D-8021 Neuried (DE)**
Erfinder: **Ludwig, Max, Ing. grad., Am Kornacker 18b, D-8000 München 70 (DE)**

ACTORUM AG

## Beschreibung

Die Erfindung betrifft eine Tastatur für Endgeräte der Kommunikationstechnik mit einer Wähl- und Prozedurtastatur sowie einer Anzeigevorrichtung, wobei die Tastatur aus einzelnen selbständigen Baugruppen besteht, die derart zusammengefügt sind, dass die Prozedurtastatur seitlich neben der Wähltastatur angeordnet ist und wobei weiterhin unterhalb der Wähl- und Prozedurtastatur die mit Bauelementen bestückten Leiterplatten einer Elektronikbaugruppe angeordnet sind.

Zur Steigerung des Bedienungskomforts sind insbesondere auf dem Gebiet der Fernsprechtechnik Tastaturen entwickelt worden, an denen neben der üblichen Tastatur zusätzliche Programmtasten angeordnet sind, die selbsttätigen Rückruf, Wahlwiederholung, Anrufumleitung, Kurzwahl unter anderem ermöglichen. Derartige Tastaturen sind zu einem Baustein zusammengefasst und in einen Fernsprecher einsetzbar. Weiterhin ist es bekannt, bei Komfort- oder Sonderfernsprechern bestimmte Rufnummern, Gebühren oder dergleichen auf einem Display zur Anzeige zu bringen. Das Display ist dann als Einzelbaugruppe an gut sichtbarer Stelle des Fernsprechgerätes angeordnet.

In der Zeitschrift Telefon Report Siemens, JRG 13, Nr. 3, September 1977 ist unter dem Titel «Fernsprech-Endgeräte-Entwicklung und neuester Stand» ein modular aufgebauter Fernsprecher beschrieben, dessen Komfortfunktionen sich je nach Bedarf erweitern lassen. So sind verschiedene Tasten, Schalter usw. dargestellt, die je nach Wunsch in einem Bedienfeld vorgesehen werden können. Eine Wähltastatur ist gegen einen Nummernschalter austauschbar. Die Tastatur besteht aus einzelnen selbständigen Baugruppen, die derart zusammengefügt sind, dass die Prozedurtastatur seitlich neben der Wähltastatur angeordnet ist und dass weiterhin unterhalb der Wähl- und Prozedurtastatur die aus mit Bauelementen bestückten Leiterplatten einer Elektronikbaugruppe angeordnet ist.

Durch die DE-A-2 902 052 ist weiterhin ein Fernsprechgerät bekannt, dessen Bauteile zum Teil in muldenartigen Vertiefungen des Gehäuses angeordnet sind. Auch dieses Gerät kann je nach den Bedürfnissen mit einer mehr oder weniger grossen Anzahl von Zusatzeinrichtungen ausgestattet werden.

Derartige Ausbildungen eignen sich jedoch hauptsächlich für grössere Fernsprecher. Kleinere Fernsprecher dagegen weisen meist aus Platzmangel ausser der Wähleinrichtung sonst keine über den üblichen Fernsprecher hinausgehende Bauelemente auf.

Aufgabe der Erfindung ist es, eine Tastatur für Fernsprechgeräte derart zu gestalten, dass auf engstem Raum eine grösstmögliche Anzahl von Zusatzeinrichtungen untergebracht werden können, so dass auch das kleinere Fernsprechgerät einen grösseren Bedienungskomfort aufweist.

Diese Aufgabe wird gemäss der Erfindung dadurch gelöst, dass die elektrische Kontaktierung der Leiterplatten untereinander wie auch die Kontaktierung zur Leiterplatte der Wähl- und Prozedurtastatur durch Steckverbinder und Federleisten erfolgt und dass oberhalb der Wähl- und Prozedurtastatur die Anzeigevorrichtung angeordnet ist, die ebenfalls über eine Steckverbindung elektrisch mit der Elektronikbaugruppe verbunden ist.

Damit ist auf engstem Raum eine Komforttastatur geschaffen, deren Elemente darüberhinaus äusserst leicht gegen andere austauschbar sind, so dass eine derartige Tastatur auch sehr wartungsfreundlich ist.

Es ist vorteilhaft, dass eine der Leiterplatten verlängert ausgebildet ist und in ihrem verlängerten Teil ein Gebührenschloss sowie einen 16 kHz-Baustein trägt.

Damit können separate Leiterplatten oder weitere Befestigungsmittel entfallen und die Verlötung kann gemeinsam mit der Leiterplatte in einem Verfahrensschritt vorgenommen werden.

Eine vorteilhafte Weiterbildung sieht vor, dass die Leiterplatten der Elektronikbaugruppe durch einen Distanzrahmen in Abstand gehalten sind. Die Elektronikbaugruppe wird somit ein selbständiges Bauteil.

Eine weitere vorteilhafte Weiterbildung sieht vor, dass die Stecker des Steckverbinders beim Zusammenbau die Federleiste durchdringen und in der Federleiste der Leiterplatte enden.

Damit kann eine Kontaktierung z.B. von zwei äusseren Leiterplatten vorgenommen werden, ohne dass eine dazwischenliegende weitere Leiterplatte davon berührt wird. Verwechslungen der Anschlüsse werden weitestgehend ausgeschlossen und die Montagegeschwindigkeit erhöht.

Im folgenden sei die Erfindung anhand von zwei Figuren näher erläutert.

Es zeigen

Fig. 1 einen Querschnitt durch einen Tastaturbaustein und

Fig. 2 einen Tastaturbaustein in Draufsicht.

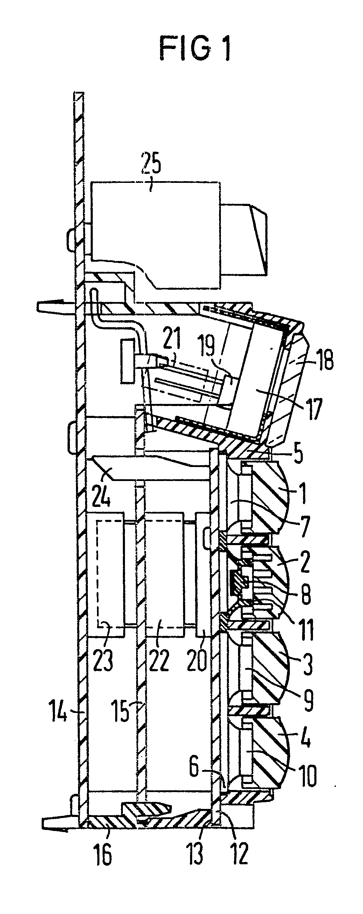

Ausgehend von Fig. 1 besteht der Tastaturbaustein aus einem wannenförmigen, rechteckigen Kunststoffgehäuse 5, das an der den Tasten 1, 2, 3, 4 zugewandten Seite quadratische Ausnehmungen für die Tasten aufweist. Die Tasten sind von der Innenseite her in das Kunststoffgehäuse eingesetzt und durch Nasen gegen ein Herausfallen gesichert. Den Tasten schliesst sich eine Kontaktmatte 6 aus elastischem Material an, die den Tasten zugewandte Hubbälge 7, 8, 9, 10 aufweist. Im Inneren tragen die Hubbälge Kontaktstücke, von denen das Kontaktstück 11 des Hubbalges 8 erkennbar ist. An die Kontaktmatte 6 schliesst sich schliesslich eine Schaltungsplatte 12 an, die ein Netz von Leiterbahnen trägt, die teilweise von den Kontaktstücken der Hubbälge überbrückbar sind. Die Schaltungsplatte 12 liegt einseitig hinter einer Ausnehmung 13 des Gehäuses und ist zusätzlich mit einer Schraube oder dergleichen in dem wannenförmigen Kunststoffgehäuse befestigt. Die bis jetzt beschriebene Einrichtung bildet für sich eine abgeschlossene Einheit, die fertigungstechnisch einer Einzelprüfung unterzogen werden kann.

Eine weitere Einheit bildet die Elektronik-Baugruppe, die aus zwei mit elektrischen Bauelementen bestückten Schaltungsplatten 14, 15 besteht und die durch einen Distanzrahmen 16 voneinander getrennt sind.

Eine weitere Einheit bildet die Anzeigevorrichtung 17, die aus einer Flüssigkristallanzeige und einer Ansteuervorrichtung besteht. Diese Anzeigevorrichtung ist in einer Ausnehmung des wannenförmigen Kunststoffgehäuses 5 angeordnet und gegenüber der Bedienungsebene geneigt. Abgedeckt ist die Anzeigevorrichtung durch eine rahmenartige, sandgestrahlt-mattierte Abdeckplatte 18, die durch eine Rastverbindung mit dem wannenförmigen Kunststoffgehäuse 5 verbunden ist.

Die Anzeigevorrichtung 17 wie auch die Schaltungsplatte 12 sind mit Steckverbindern 19, 20 versehen, wobei die Stecker des Steckverbinders 19 beim Zusammenbau in der Federleiste 21 enden. Die Stecker des Steckverbinders 20 durchdringen unter Kontaktgabe die Federleiste 22 und enden in einer weiteren Federleiste 23 der Schaltungsplatte 14. Damit werden beim Zusammenbau der verschiedenen Einheiten alle elektrischen Verbindungen automatisch hergestellt. Schliesslich ist erwähnenswert, dass der Distanzrahmen 16 mehrere zapfenartige Erhöhungen 24 aufweist, die beim Zusammenbau der Einheiten sich hinter der Schaltungsplatte 12 anlegen und ein Widerlager bilden.

Damit wird ein Abbrechen oder Hineindrücken der Schaltungsplatte 12 z.B. durch zu starkes Herunterdrücken der Tasten verhindert.

Eine letzte Einheit besteht aus einem Gebührenschloss 25 und einem 16 kHz-Empfangsbaustein, die auf einem verlängerten Teil der Schaltungsplatte 14 angeordnet und elektrisch kontaktiert sind.

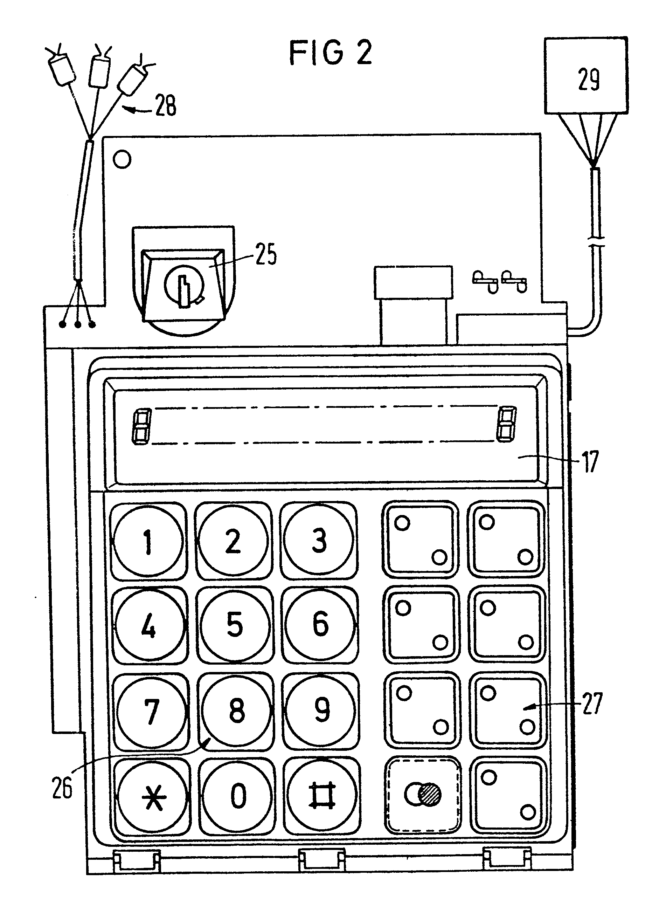

Die in Figur 2 dargestellte Draufsicht auf den Tastaturbaustein zeigt die Wählorgane 26, die durch die bekannten Tasten gebildet sind und neben diesen angeordnet die Prozedurtasten 27. Die beiden Gruppen sind optisch durch vergrösserten Abstand zwischen diesen Tasten voneinander getrennt. Oberhalb dieser Tasten ist die Anzeigevorrichtung 17 angeordnet, die in etwa 15° gegenüber der durch die Tasten gebildeten Bedienungsebene geneigt ist, so dass die Erkennbarkeit vergrössert wird. Weiterhin erkennbar ist das Gebührenschloss 25 sowie weitere Stecker 28 und 29.

## Patentansprüche

1. Tastatur für Endgeräte der Kommunikationstechnik mit einer Wähl- und Prozedurtastatur (26, 27) sowie einer Anzeigevorrichtung (17), wobei die Tastatur aus einzelnen selbständigen Baugruppen besteht, die derart zusammengefügt sind, dass die Prozedurtastatur (27) seitlich neben der Wähltastatur (26) angeordnet ist und wobei weiterhin unterhalb der Wähl- und Prozedurtastatur (26, 27) die mit Bauelementen bestückten Leiterplatten (14, 15) einer Elektronikbaugruppe angeordnet sind, dadurch gekennzeichnet, dass die elektrische Kontaktierung der Leiterplatten (14, 15) der Elektronikbaugruppe untereinander wie auch die Kontaktierung zur Leiterplatte der Wähl- und Prozedurtastatur durch Steckverbinder (20) und Federleisten (22, 23) erfolgt und dass oberhalb der Wähl- und Prozedurtastatur die Anzeigevorrichtung (17) angeordnet ist, die ebenfalls über eine Steckverbindung (19, 21) elektrisch mit der Elektronikbaugruppe verbunden ist.

2. Tastatur nach Anspruch 1, dadurch gekennzeichnet, dass eine der Leiterplatten (14) verlängert ausgebildet ist und in ihrem verlängerten Teil ein Gebührenschloss (25) sowie einen 16 kHz-Baustein trägt.

3. Tastatur nach Anspruch 1, dadurch gekennzeichnet, dass die Leiterplatten (14, 15) der Elektronikbaugruppe durch einen Distanzrahmen (16) in Abstand gehalten sind.

4. Tastatur nach Anspruch 1, dadurch gekennzeichnet, dass die Stecker des Steckverbinders (20) beim Zusammenbau die Federleiste (22) durchdringen und in der Federleiste (23) der Leiterplatte (14) enden.

## Claims

1. A keyboard for communications technology terminals comprising a dialling- and procedure keyboard (26, 27) and a display device (17), where the keyboard comprises individual, independent assemblies which are connected in such manner that the procedure keyboard (27) is arranged beside the dialling keyboard (26) and where moreover the circuit boards (14, 15), equipped with components, of an electronic assembly and arranged beneath the dialling- and procedure keyboard (26, 27), characterised in that the electrical contacting of the circuit boards (14, 15) of the electronic assembly one to another and also the contacting to the circuit board of the dialling- and procedure keyboard is effected by means of plug connectors (20) and spring strips (22, 23), and that the display device (17), which is likewise electrically connected to the electronic assembly via a plug connection (19, 21), is arranged above the dialling- and procedure keyboard.

2. A keyboard as claimed in claim 1, characterised in that one of the circuit boards (14) is extended and its extended component comprises a charging lock (25) and a 16 kHz-module.

3. A keyboard as claimed in claim 1, characterised in that the circuit boards (14, 15) of the electronic assembly are spaced by a spacer frame (16).

4. A keyboard as claimed in claim 1, characterised in that on assembly the plugs of the plug connector (20) penetrate the spring strip (22) and terminate in the spring strip (23) of the circuit board (14).

## Revendications

1. Clavier pour terminaux de systèmes de communication, comprenant un clavier de sélection et un clavier de procédure (26, 27), ainsi qu'un dispositif d'affichage (17), le clavier étant constitué de sous-ensembles individuels autonomes, qui sont assemblés de manière que le clavier de procédure (27) soit disposé à côté du clavier de sélection (26) avec disposition, en plus, au-dessous des claviers de sélection et de procédure (26, 27), des cartes de circuits imprimés (14, 15), garnies de composants, d'un sous-ensemble électronique, caractérisé en ce que la connexion électrique des cartes de circuits imprimés (14, 15) du sous-ensemble électronique entre elles, de même que la connexion de la carte de circuits imprimés des claviers de sélection et de procédure, sont réalisées par des connecteurs à fiches (20) et des connecteurs multiples à ressorts (22, 23) et que le dispositif d'affichage (17) est agencé au-dessus des claviers de sélection et de procédure, dispositif d'affichage qui est également connecté électriquement par une liaison à fiches (19, 21) au sous-ensemble électronique.

2. Clavier selon la revendication 1, caractérisé en ce que l'une des cartes imprimées (14) est prolongée et porte dans son prolongement une serrure de taxation (25) et un module de réception à 16 kHz.

3. Clavier selon la revendication 1, caractérisé en ce que les cartes imprimées (14, 15) du sous-ensemble électronique sont maintenues à distance l'une de l'autre par un cadre-entretoise (16).

4. Clavier selon la revendication 1, caractérisé en ce que les fiches du connecteur à fiches (20) traversent le connecteur multiple à ressorts (22) lors de l'assemblage et se terminent dans le connecteur multiple à ressorts (23) de la carte imprimée (14).

# FIG 1

# FIG 2